# EUROPÄISCHE PATENTSCHRIFT

(11) **EP 3 201 042 B1**
(45) Veröffentlichungstag und Bekanntmachung des Hinweises auf die Patenterteilung: **09.10.2019**
(21) Anmeldenummer: 15763843.8
(22) Anmeldetag: 01.09.2015
(51) Int. Cl.: B60N 2/08

(54) **LÄNGSEINSTELLER FÜR EINEN FAHRZEUGSITZ SOWIE FAHRZEUGSITZ**
LONGITUDINAL ADJUSTMENT FOR A VEHICLE SEAT AND VEHICLE SEAT
RÉGLAGE LONGITUDINAL POUR SIÈGE DE VÉHICULE ET SIÈGE DE VÉHICULE

(30) Priorität: 30.09.2014 DE 102014219868; 31.07.2015 WO PCT/EP2015/067621
(43) Veröffentlichungstag der Anmeldung: 09.08.2017
(73) Patentinhaber: Adient Luxembourg Holding S.à r.l., 1855 Luxembourg (LU)
(72) Erfinder: SPRENGER, Erik, 42929 Wermelskirchen (DE); ROVNY, Maros, 91305 Trencin (SK)
(74) Vertreter: Finger, Catrin
(86) Internationale Anmeldenummer: PCT/EP2015/069903
(87) Internationale Veröffentlichungsnummer: WO 2016/050429

(56) Entgegenhaltungen:
- WO-A1-2013/146774
- DE-A1- 10 045 386
- DE-U1-202008 001 132
- US-B1- 6 637 712

## Beschreibung

Die Erfindung betrifft einen Längseinsteller für einen Fahrzeugsitz und einen Fahrzeugsitz mit einem solchen Längseinsteller.

Ein Längseinsteller der genannten Art ist beispielsweise aus der DE 10 2006 021 884 B3 bekannt. Hierbei sind eine erste, mit der Fahrzeugstruktur verbundene Sitzschiene und eine zweite, mit der Sitzstruktur verbundene Sitzschiene vorgesehen, welche sich wechselseitig umgreifen und relativ zueinander in Längsrichtung beweglich sind. Ferner sind eine Schienenverriegelung, welche weitgehend innerhalb des Schienenprofils angeordnet ist, und eine außerhalb des Schienenprofils angeordnete, bei Betätigung auf die Schienenverriegelung einwirkende Entriegelungsklappe vorgesehen. Aus der DE 10 2008 058 518 A1 ist eine Betätigungsanordnung für eine Schienenverriegelung bekannt, die über einen Hebel von außen in eine Öffnung in der Sitzschiene eingesteckt ist.

Aus der US 7,314,204 B2 und DE 203 11 948 U1 sind Längseinsteller bekannt, welche innerhalb des Schienenprofils angeordnete Verriegelungsvorrichtung aufweisen.

Weitere Längseinsteller mit Betätigungsanordnungen sind aus der WO2013/146774 A1, DE 20 2008 001 132 U1 und US 6 637 712 B1 bekannt.

Aufgabe der vorliegenden Erfindung ist es, einen verbesserten Längseinsteller für einen Fahrzeugsitz sowie einen Fahrzeugsitz mit einem solchen verbesserten Längseinsteller anzugeben.

Hinsichtlich des Längseinstellers wird die Aufgabe erfindungsgemäß mit den Merkmalen des Patentanspruchs 1 gelöst. Hinsichtlich des Fahrzeugsitzes wird die Aufgabe erfindungsgemäß durch die Merkmale des Patentanspruchs 13 gelöst.

Vorteilhafte Weiterbildungen der Erfindung sind Gegenstand der Unteransprüche.

Der erfindungsgemäße Längseinsteller für einen Fahrzeugsitz umfasst mindestens eine fahrzeugfeste Sitzschiene und eine sitzfeste Sitzschiene, die einander unter Bildung eines Schienenprofils wechselseitig umgreifen und relativ zueinander in Längsrichtung beweglich sind und miteinander mittels einer Schienenverriegelung verriegelbar sind, und mindestens eine Betätigungsanordnung zur Betätigung der Schienenverriegelung, wobei zwischen der Betätigungsanordnung und der Schienenverriegelung mindestens ein Adapter angeordnet ist, der als ein Kraftübertragungselement derart ausgestaltet ist, dass zur Anbindung der Betätigungsanordnung zumindest ein integrierter Anbindungsbereich des Adapters aus dem Schienenprofil herausragt und mindestens ein integriertes Entriegelungselement des Adapters zur Entriegelung der Schienenverriegelung vorgesehen ist. Das Entriegelungselement ist derart ausgestaltet, dass dieses bei Betätigung der Betätigungsanordnung in die Schienenverriegelung zu deren Entriegelung wirksam eingreift.

Dabei weist der Adapter mindestens zwei Anbindungsbereiche auf, die jeweils korrespondierend zu einem der unterschiedlich ausgebildeten Betätigungsanordnungen ausgestaltet sind. Ein solch ausgestalteter Adapter ermöglicht eine einfache Adaption und Integration verschieden ausgestalteter Betätigungsanordnungen an einen Längseinsteller und somit einen modularen Längseinsteller. Dabei kann die Betätigungsanordnung als Bedienhebel oder -bügel ausgebildet sein. Beispielsweise kann die Betätigungsanordnung als ein Querstab mit angeschweißtem Metallgriff oder mit einem mechanisch verbundenen Kunststoffgriff oder ein Querstab mit angeschweißtem Bügel, insbesondere u-förmigem Bügel, oder als ein separater einteiliger Bügel, insbesondere ein u-förmiger Bügel, ausgebildet sein.

Weiterhin ist innerhalb des durch die Sitzschienen gebildeten Schienenprofils ein innerer Anbindungsbereich des Adapters angeordnet, der sich in Längsausrichtung der Sitzschienen erstreckt und zur Aufnahme und Halterung einer in das Schienenprofil innen eingeführten Betätigungsanordnung ausgebildet ist. Dabei ist der Adapter auf der der Betätigungsanordnung zugewandten Seite mit dieser Betätigungsanordnung form- und/oder kraftschlüssig verbunden. Auf der anderen, der Betätigungsanordnung gegenüberliegenden Seite des Adapters ist dieser derart ausgestaltet, dass der Adapter bei Betätigung der Betätigungsanordnung in Eingriff mit der Schienenverriegelung gelangt zur Entriegelung dieser. In unbetätigter Stellung der Betätigungsanordnung ist das betreffende verriegelungsseitige Ende mit einem integrierten Entriegelungselement versehen und im Abstand zur Schienenverriegelung angeordnet. Somit ist der Adapter für eine jegliche Schienenverriegelung verwendbar und auch in bereits vorhandene Längseinsteller integrierbar. Ein herkömmlicher Entriegelungshebel kann hierdurch entfallen. Zudem ist keine zusätzliche herkömmliche Fußabdeckung erforderlich. Somit ist der Raumbedarf minimiert und die Kosten reduziert. Zudem sind zusätzliche Aussparungen im Schienenprofil vermieden und somit die Festigkeit erhöht sowie ein symmetrischer Aufbau des Schienenpaares ermöglicht. Dabei sind bevorzugt aus Symmetriegründen zwei Adapter - einer in der linken Schienenanordnung und einer in der rechten Schienenanordnung des Schienenpaares - angeordnet, wobei die zwei Adapter über die Betätigungsanordnung miteinander verbunden sind.

In einer möglichen Ausführungsform ragt der integrierte Anbindungsbereich für die Anbindung der Betätigungsanordnung senkrecht aus einer oberen Sitzschiene, insbesondere aus einer schlitzförmigen Aussparung in der oberen Sitzschiene, heraus. An diesem senkrecht aus der oberen Sitzschiene herausragenden Anbindungsbereich ist die Betätigungsanordnung drehfest befestigt, so dass ein Schwenken der Betätigungsanordnung zu einem Schwenken des Anbindungsbereiches führt, wodurch der Drehpunkt der Betätigungsanordnung im Anbindungsbereich des Adapters gebildet ist. Hierzu kann zumindest der Anbindungsbereich des Adapters aus einem Federblech gebildet sein.

Darüber hinaus kann der Adapter als Kraftübertragungselement derart optional ausgestaltet sein, dass wenigstens zwei unterschiedlich ausgebildete Betätigungsanordnungen, insbesondere lösbar, am Adapter befestigbar sind.

Ein solcher Längseinsteller ist universal einsetzbar und ermöglicht sowohl eine Verwendung mit innerer Betätigung, insbesondere mit einem innen eingreifenden Bedienhebel, als auch mit äußerer Betätigung, insbesondere mit einem außen eingreifenden Bedienhebel. Zudem ist ein solch ausgestalteter Längseinsteller für Schienenanordnungen sowohl mit hohem als auch niedrigem Schienenprofil geeignet. Ferner ist ein solcher Längseinsteller unabhängig von der Art und der Ausgestaltung der Schienenverriegelung und somit zur Adaption einer jeglichen Schienenverriegelung geeignet.

Eine Ausführungsform sieht vor, dass der Adapter innerhalb des durch die Sitzschienen gebildeten Schienenprofils angeordnet ist und zumindest abschnittsweise aus dem Schienenprofil herausragt. Durch die Ausgestaltung des Adapters als Kraftübertragungselement und die innen liegende Anordnung des Adapters ist eine kompakte und einfache sowie geschützte Anordnung gegeben. Insbesondere wird der Platzbedarf für die Betätigung minimiert.

Des Weiteren ist vorgesehen, dass aus dem Schienenprofil heraus senkrecht zur Längsausrichtung der Sitzschienen ein äußerer Anbindungsbereich des Adapters herausragt, der zur Aufnahme und Halterung einer außen an das Schienenprofil angeordneten Betätigungsanordnung ausgebildet ist. Hierzu ist beispielsweise die obere Sitzschiene mit einer Aussparung versehen. Hierdurch ist ein außen eingreifender Bedienhebel in einfacher Art und Weise form- und/oder kraftschlüssig an dem äußeren Anbindungsbereich befestigbar, beispielsweise rastbar in Art einer Press-Fit- oder Snap-Fit-Verbindung. Somit ist eine herkömmliche Schweißverbindung sicher vermieden.

Gemäß einer weiteren Ausführungsform ist der Adapter derart als Kraftübertragungselement ausgebildet, dass der Drehpunkt der Betätigungsanordnung im Bereich der sitzseitigen Sitzschiene gebildet ist. Somit ist der Drehpunkt der Betätigungsanordnung von dieser nach innen auf den Adapter versetzt und ermöglicht. Hierzu ist der Adapter an der sitzseitigen Sitzschiene schwenkbar angeordnet.

Um sicherzustellen, dass die Betätigungsanordnung selbsttätig in ihrer Passiv- oder Ruhestellung verbringt, in der sie nicht entriegelnd mit der Schienenverriegelung zusammenwirkt, ist die Betätigungsanordnung federbelastet am Adapter angeordnet. Hierzu ist ein Federmittel vorgesehen, das die Betätigungsanordnung in der Passivstellung vorspannt. Darüber hinaus verhindert dieses Federmittel, dass in der Passivstellung Klappergeräusche durch lose Halterung der Betätigungsanordnung entstehen.

In einer möglichen Ausführungsform ist der Adapter als ein teilweise offenes, beispielsweise u-förmiges, oder geschlossenes Profil ausgebildet. Hierdurch ist eine von vorne in das Schienenprofil eingeführte Betätigungsanordnung einfach und sicher in den innen liegenden Adapter einführbar und in diesem form- und/oder kraftschlüssig fixierbar. Darüber hinaus steht von dem Adapter, insbesondere von dem Profil als Basiselement, senkrecht mindestens ein Anbindungsarm in Form einer Haltelasche oder Haltefahne ab, an welchem eine von außen eingreifende Betätigungsanordnung form- und/oder kraftschlüssig fixierbar ist. Dabei kann der Adapter ein- oder mehrteilig ausgebildet sein. So kann das Profil aus Metall und der Anbindungsarm aus Kunststoff gebildet sein. Alternativ kann der Adapter als ein einteiliges Kunststoff- oder Metall-Bauteil ausgebildet sein.

Eine weitere Ausführungsform sieht vor, dass der Adapter als ein doppelwandiges Formteil ausgebildet ist. Beispielsweise kann der Adapter aus einem einzelnen Formteil gebildet sein, der spiegelsymmetrisch ausgebildet ist und entlang einer Symmetrieachse gefaltet ist, wodurch zwei aneinander liegende Wände gebildet sind. Alternativ kann der Adapter aus zwei gleichen Teilen oder Wänden gebildet sein, die miteinander verbunden sind.

Des Weiteren ist der Adapter derart gestaltet, dass im Anbindungsbereich die Wände aneinander liegen. Im Bereich des Entriegelungselements sind die Wände zueinander beabstandet. Hierzu sind die Wände im Bereich des integrierten Entriegelungselements aufgeweitet und bilden dieses, welches dann auf die Schienenverriegelung eingreift.

Darüber hinaus ist der Adapter derart gestaltet, dass von den aneinander liegenden Wänden zumindest zwei laschenförmige Haltefahnen voneinander weg nach außen abragen. Diese Haltefahnen sind in zu diesen korrespondierend ausgeformten Schienenaufnahmen gehalten.

Bevorzugt weist ein Fahrzeugsitz den erfindungsgemäßen Längseinsteller auf, wobei in der Regel zwei Schienenpaare mit jeweils einer Ober- und einer Unterschiene am Fahrzeugsitz angeordnet sind, in deren Schienenprofile jeweils ein Adapter und eine mit diesem zusammenwirkende Schienenverriegelung angeordnet ist, wobei eine gemeinsame Betätigungsanordnung mit beiden Adaptern zusammenwirkt.

Ausführungsbeispiele der Erfindung werden anhand von Zeichnungen näher erläutert. Dabei zeigen:
Figur 1 schematisch in perspektivischer Darstellung einen Längseinsteller für einen Fahrzeugsitz mit einem innen liegenden Adapter zur Anbindung verschiedenartiger Betätigungsanordnungen,
Figuren 2A, 2B, 2C schematisch in Seitenansicht und Draufsicht ein Schienenpaar eines Längseinstellers mit innen liegendem Adapter und Schienenverriegelung,
Figuren 3A bis 3E schematisch in Draufsicht verschiedene Ausführungsformen für eine Betätigungsanordnung eines Längseinstellers,
Figuren 4 bis 9 schematisch verschiedene Ausführungsformen für einen Adapter, und
Figuren 10 bis 18 schematisch eine alternative Ausführungsform für einen Längseinsteller mit einem alternativen Adapter.

Einander entsprechende Teile sind in allen Figuren mit den gleichen Bezugszeichen versehen.

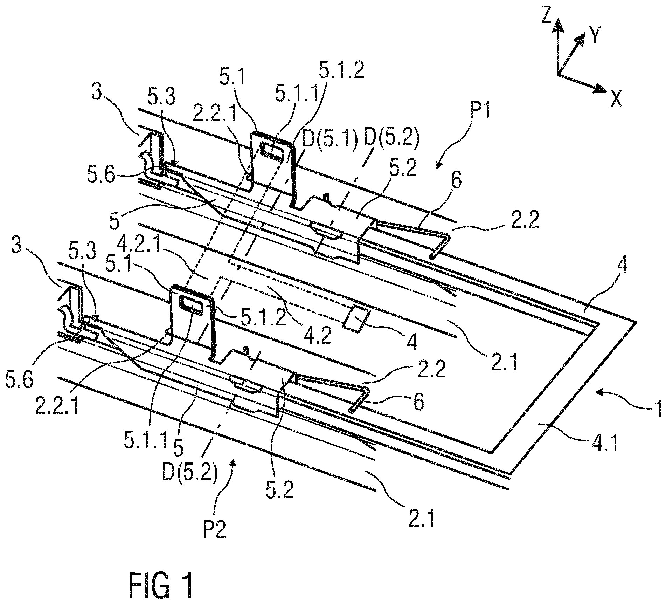

Figur 1 zeigt schematisch in perspektivischer Darstellung einen Längseinsteller 1 für einen Fahrzeugsitz. Der Längseinsteller 1 dient zur manuellen Längseinstellung, d.h. der Einstellung einer Sitzlängsposition, eines nicht näher dargestellten Fahrzeugsitzes. Auf jeder Fahrzeugsitzseite ist der Längseinsteller 1 mit jeweils einem Schienenpaar P1, P2 von Sitzschienen 2.1, 2.2 versehen, wobei jeweils eine der Sitzschienen 2.1 eines der Schienenpaare P1, P2 fahrzeugfest ausgebildet ist und mit einer Fahrzeugstruktur, insbesondere dem Fahrzeugboden, verbunden ist. Die andere Sitzschiene 2.2 ist sitzfest am Fahrzeugsitz befestigt.

Die beiden Sitzschienen 2.1, 2.2 umgreifen einander wechselseitig unter Bildung eines Schienenprofils und sind relativ zueinander in Längsrichtung beweglich, wobei zwischen den beiden Sitzschienen 2.1, 2.2 zur Verringerung der Reibung Kugeln (nicht dargestellt) angeordnet sind.

Bevorzugt weist der erfindungsgemäße Längseinsteller 1 in der Regel zwei Schienenpaare P1, P2 mit jeweils einer Ober- und einer Unterschiene als Sitzschienen 2.1, 2.2 auf.

Die beiden Sitzschienen 2.1, 2.2 sind miteinander mittels einer Schienenverriegelung 3 verriegelbar. Die Schienenverriegelung 3 ist weitgehend innerhalb des Schienenprofils angeordnet und kann beliebig ausgestaltet sein, beispielsweise als eine Rastplatte oder ein Rasthebel oder eine Rastklinke.

Diese Schienenverriegelung 3 ist mittels mindestens einer Betätigungsanordnung 4, die zumindest teilweise außerhalb der Sitzschienen 2.1, 2.2 angeordnet ist, lösbar und betätigbar. Die Betätigungsanordnung 4 zur Betätigung, insbesondere Entriegeln oder Lösen, der Schienenverriegelung 3 kann verschiedenartig ausgebildet sein, zum Beispiel als ein Bügel 4.1 oder ein Handgriff 4.2. Die Betätigungsanordnung 4 ist derart ausgestaltet, dass diese am vorderen Ende des Fahrzeugsitzes hervorragt und von einem Nutzer betätigt werden kann.

Die Schienenverriegelung 3 ist insbesondere separat ausgebildet und weist zumindest ein Verriegelungselement 3.1 auf, welches beweglich an einer der Sitzschienen 2.1, 2.2, insbesondere an der oberen Sitzschiene 2.2, angeordnet ist und gegebenenfalls vorgespannt ist und im verriegelten Zustand in beide Sitzschienen 2.1, 2.2, beispielsweise mittels Zähne (nicht dargestellt), verriegelnd, beispielsweise in schlitzförmige Schienenöffnungen (nicht dargestellt) eingreift.

Zwischen der Betätigungsanordnung 4 und der Schienenverriegelung 3 ist mindestens ein Adapter 5 angeordnet, der als ein Kraftübertragungselement ausgestaltet ist und zur Anbindung der Betätigungsanordnung 4 zumindest einen integrierten Anbindungsbereich 5.1, der aus dem Schienenprofil herausragt, und zur Entriegelung der separaten Schienenverriegelung 3 mindestens ein integriertes Entriegelungselement 5.6 , das in Richtung der Schienenverriegelung 3 vom Adapter 5 abragt, umfasst.

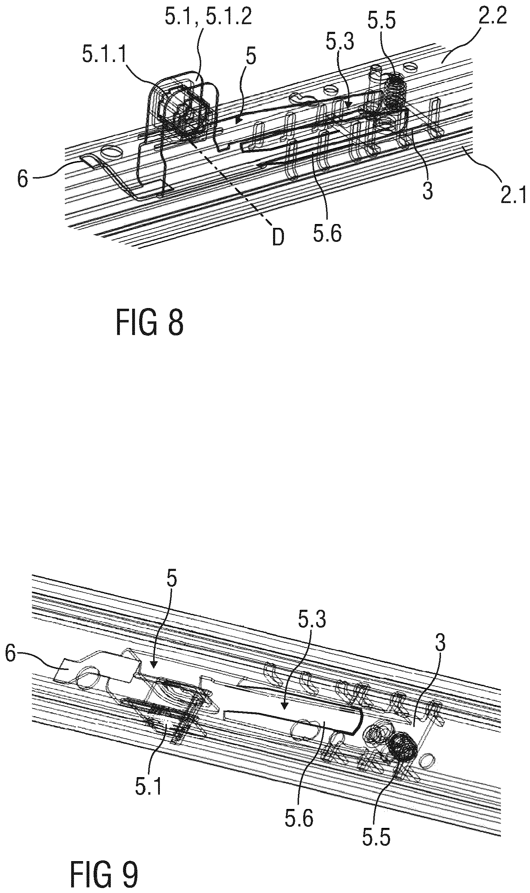

Optional, wie in Figuren 1 bis 9 dargestellt, kann der als ein Kraftübertragungselement ausgestaltete Adapter 5 derart ausgebildet sein, dass wenigstens zwei unterschiedlich ausgebildete Betätigungsanordnungen 4, wie ein Bügel 4.1 oder ein Handgriff 4.2, lösbar am Adapter 5 befestigbar sind.

Je Längseinsteller 1 ist je Schienenpaar P1, P2 ein Adapter 5 vorgesehen, der jeweils mit einer zugehörigen Schienenverriegelung 3 zusammenwirkt, wobei eine gemeinsame Betätigungsanordnung 4 über die beiden Adapter 5 und mit diesen mit den beiden Schienenverriegelungen 3 zusammenwirkt. Dabei ist je Schienenpaar P1, P2 jeweils ein Adapter 5 angeordnet.

Der Adapter 5 ist jeweils innen im Schienenprofil angeordnet und ragt zumindest abschnittsweise aus dem Schienenprofil heraus und ist zur Anbindung verschiedenartiger Betätigungsanordnungen 4 ausgelegt und ausgestaltet.

Dabei weist der Adapter 5 mindestens zwei Anbindungsbereiche 5.1, 5.2 auf, die jeweils korrespondierend zu einem der unterschiedlich ausgebildeten Betätigungsanordnungen 4 ausgestaltet sind. Ein solch ausgestalteter modularer Adapter 5 ermöglicht eine einfache Adaption und Integration verschieden ausgestalteter Betätigungsanordnungen 4 an einen Längseinsteller 1. Dabei kann der Adapter 5 als einteilig oder mehrteilig ausgebildet sein.

Einer der Anbindungsbereiche 5.1 ragt hierbei zur Aufnahme und Halterung einer außen an das Schienenprofil angeordneten Betätigungsanordnung 4 senkrecht zur Längsausrichtung der Sitzschienen 2.1, 2.2 aus dem Schienenprofil heraus und ist als eine Verlängerung, Haltefahne oder Haltelasche ausgebildet. Hierzu ist beispielsweise die obere Sitzschiene 2.2 mit einer Aussparung 2.2.1 versehen, wobei von dem Adapter 5, insbesondere von dem Profil als Basiselement, senkrecht im Anbindungsbereich 5.1 mindestens ein Anbindungsarm 5.1.2 in Form einer Haltelasche oder Haltefahne abragt, an welchem die von außen eingreifende Betätigungsanordnung 4 form- und/oder kraftschlüssig fixierbar ist.

Dieser außerhalb des Schienenprofils liegende äußere Anbindungsbereich 5.1 weist eine Öffnung 5.1.1 auf, in welche eine der Betätigungsanordnungen 4, insbesondere der Handgriff 4.2, von außen aufnehmbar und form- und/oder kraftschlüssig fixierbar ist, beispielsweise klipsbar oder rastbar ist.

Ein anderer Anbindungsbereich 5.2 ist innerhalb des durch die Sitzschienen 2.1, 2.2 gebildeten Schienenprofils angeordnet und bildet somit einen inneren Anbindungsbereich 5.2 des Adapters 5.

Dieser innere Anbindungsbereich 5.2 erstreckt sich in Längsausrichtung der Sitzschienen 2.1, 2.2 innerhalb des Schienenprofils. Dabei wird bzw. ist eine beispielsweise als ein Bügel 4.1 ausgebildete Betätigungsanordnung 4 von vorne in das Schienenprofil und weiter in den inneren Anbindungsbereich 5.2 des jeweiligen Adapters 5 eingeführt und dort mit dem Adapter 5 verbunden.

Dabei ist der Adapter 5 auf der der Betätigungsanordnung 4 zugewandten Seite mit dieser form- und/oder kraftschlüssig verbunden. Hierzu ist der Adapter 5 als ein teilweise offenes, beispielsweise u-förmiges, oder geschlossenes Profil ausgebildet. Im Ausführungsbeispiel nach Figur 1 weist der Adapter 5 im Bereich des inneren Anbindungsbereiches 5.2 ein u-förmiges Profil auf, so dass eine von vorne in das Schienenprofil eingeführte Betätigungsanordnung 4 einfach und sicher in den innen liegenden Adapter 5 einführbar und in diesem fixierbar ist.

Alternativ zum u-förmigen Profil des Adapters 5 im inneren Anbindungsbereich 5.2 kann dieses auch als ein C- oder L-förmiges Profil oder eine Kombination aus verschiedenen Profilen ausgebildet sein.

Zur Vermeidung von Klappergeräuschen und zur selbsttätigen Halterung der Betätigungsanordnung 4 in der Passiv- oder Ruhestellung ist diese am Adapter 5 federvorgespannt gehalten. Hierzu ist ein Federelement 6, zum Beispiel eine Schenkelfeder, zwischen der Betätigungsanordnung 4 und dem jeweiligen Anbindungsbereich 5.1 oder 5.2 angeordnet.

Auf der anderen, der Betätigungsanordnung 4 gegenüberliegenden Seite des Adapters 5 in Richtung der Schienenverriegelung 3 ist der Adapter 5, insbesondere dessen Adapterende 5.3, derart ausgestaltet, dass dieser bei Betätigung der jeweils angebundenen Betätigungsanordnung 4 - Handgriff 4.2 oder Bügel 4.1 - in Eingriff mit der separaten Schienenverriegelung 3 zur Entriegelung dieser gelangt. Insbesondere kommt es in Folge der Betätigung der Betätigungsanordnung 4 zu einem Schwenken des Adapters 5 und damit des Adapterendes 5.3, wodurch dieses in die separate Schienenverriegelung 3 derart eingreift, dass diese vertikal nach unten in eine entriegelte Stellung gebracht wird.

In unbetätigter Stellung der Betätigungsanordnung 4 ist das betreffende verriegelungsseitige Adapterende 5.3 im Abstand zur separat ausgebildeten Schienenverriegelung 3 angeordnet. Hierzu weist das Adapterende 5.3 eine fahnenartige Verlängerung auf, die das integrierte Entriegelungselement 5.6 bildet.

Beispielsweise ist das an der Schienenverriegelung 3 eingreifende Entriegelungselement 5.6 als ein Entriegelungshebel oder ein Entriegelungsarm ausgebildet, der bei Betätigung der Betätigungsanordnung 4 auf die Schienenverriegelung 3 einwirkt, insbesondere diese vertikal nach unten drückt und diese entriegelt. Somit ist der Adapter 5 für verschiedenartige Schienenverriegelungen 3 verwendbar und auch in bereits vorhandene Längseinsteller 1 integrierbar. Ein herkömmlicher zusätzlicher Entriegelungshebel kann entfallen.

Wie gezeigt, sind aus Symmetriegründen zwei Adapter 5 - einer im rechten Schienenpaar P1 und einer im linken Schienenpaar P2 - angeordnet, wobei die zwei Adapter 5 über die Betätigungsanordnung 4 miteinander verbunden sind. Dabei ist der Handgriff 4.2 mit einem Querstab oder einer Querstange 4.2.1 versehen, deren Enden in den Öffnungen 5.1.1 form- und/oder kraftschlüssig gehalten sind.

In nicht näher dargestellter Art und Weise kann der zuvor beschriebene modulare Adapter 5 mit den verschiedenen Anbindungsbereichen 5.1, 5.2 ein- oder mehrteilig ausgebildet sein. So kann das Profil, insbesondere der Anbindungsbereich 5.2, aus Metall und der mindestens eine Anbindungsarm 5.1.2 aus Kunststoff gebildet sein. Alternativ kann der Adapter 5 als ein einteiliges Kunststoff- oder Metall-Bauteil ausgebildet sein.

Des Weiteren ist der Adapter 5 derart als Kraftübertragungselement ausgebildet, dass der Drehpunkt D der Betätigungsanordnung 4 im Bereich der sitzseitigen Sitzschiene 2.2 gebildet ist. Somit ist der Drehpunkt D der Betätigungsanordnung 4 von dieser nach innen auf den Adapter 5 versetzt. Hierzu ist der Adapter 5 an der sitzseitigen Sitzschiene 2.2 schwenkbar gelagert.

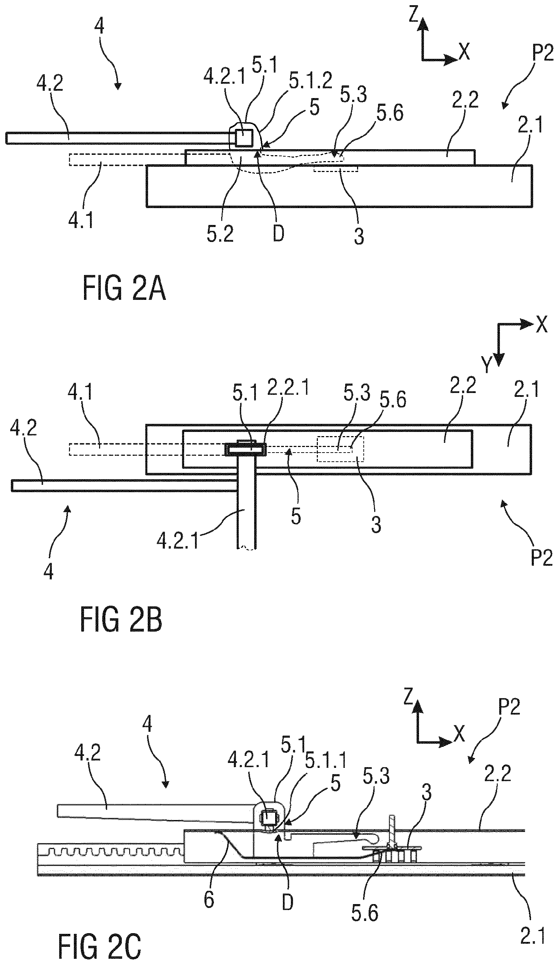

Figuren 2A, 2B, 2C zeigen schematisch in Seitenansicht und Draufsicht ein erfindungsgemäßes Schienenpaar P2 eines Längseinstellers 1 mit innen liegendem Adapter 5 und innen liegender Schienenverriegelung 3. Der Adapter 5 ist als ein Kraftübertragungselement derart ausgestaltet, dass zur Anbindung einer Betätigungsanordnung 4 zumindest ein Anbindungsbereich 5.1 aus dem Schienenprofil herausragt und zur Entriegelung der Schienenverriegelung 3 mindestens ein integriertes Entriegelungselement 5.6 vorgesehen ist.

Der Adapter 5 ist geeignet und ausgestaltet über den äußeren Anbindungsbereich 5.1 die von außen eingreifende Betätigungsanordnung 4 in Form des Handgriffs 4.2 aufzunehmen und mit dieser zusammenzuwirken zur Entriegelung der inneren Schienenverriegelung 3.

Der integrierte Anbindungsbereich 5.1 des Adapters 5 ragt senkrecht aus der schlitzförmigen Aussparung 2.2.1 in der oberen Sitzschiene 2.2 heraus. An diesem herausragenden äußeren Anbindungsbereich 5.1 ist die Betätigungsanordnung 4 drehfest befestigt, so dass ein Schwenken der Betätigungsanordnung 4 am Handgriff 4.2, insbesondere in einem kleinen Schwenkbereich von 5° bis 15°, zu einem Schwenken des Anbindungsbereiches 5.1 führt, wodurch der Drehpunkt D der Betätigungsanordnung 4 im Anbindungsbereich 5.1, insbesondere im Kantenbereich der sitzseitigen Sitzschiene 2.2, gebildet ist. Hierzu ist zumindest der Anbindungsbereich 5.1 des Adapters 5 aus einem Federblech gebildet.

Optional kann ein innerer Anbindungsbereich 5.2 am Adapter 5 ausgebildet sein, der geeignet und ausgestaltet ist, die von innen eingreifende Betätigungsanordnung 4 in Form eines Bügels 4.1 aufzunehmen und mit dieser zusammenzuwirken zur Entriegelung der inneren Schienenverriegelung 3.

Dabei ist im Betrieb nur eine der Betätigungsanordnungen 4 - entweder der Handgriff 4.2 oder der Bügel 4.1 - am Längseinsteller 1 angeordnet und im Eingriff und in Zusammenwirkung mit dem Adapter 5.

Zur selbsttätigen Rückstellung und Halterung der Schienenverriegelung 3 in der Betriebs- oder Sperrposition zum Sperren der beiden Sitzschienen 2.1, 2.2 ist diese federvorgespannt gehalten. Hierzu ist das integrierte Entriegelungselement 5.6 als eine Rückstellfeder ausgebildet. Mit anderen Worten: Das integrierte Entriegelungselement 5.6 am Adapterende 5.3 ist als ein vom Profil des Adapters 5 abragender Federarm ausgebildet, der in die Schienenverriegelung 3 wirksam eingreift und hier als Verriegelungsfeder und Rückstellfeder dient. Dabei kann das Entriegelungselement 5.6 derart gestaltet sein, dass auf die Schienenverriegelung 3 von oben eine Torsionskraft einwirkt und diese in die entriegelte Stellung drückt.

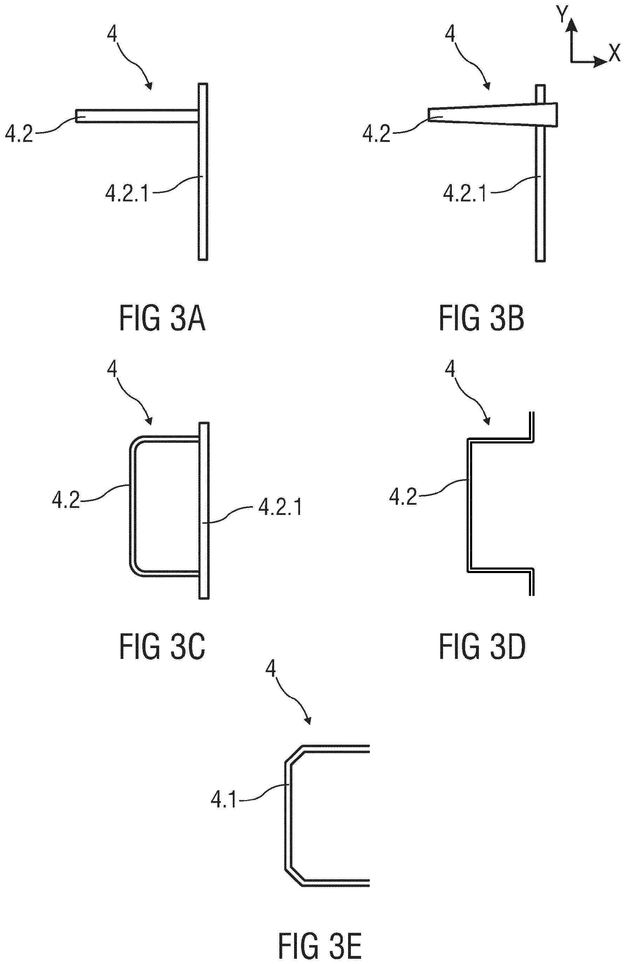

Figuren 3A bis 3E zeigen schematisch in Draufsicht verschiedene Ausführungsformen für eine Betätigungsanordnung 4 des Längseinstellers 1. Dabei kann die Betätigungsanordnung 4 als ein außen am Adapter 5 eingreifender Bedienhebel mit einem Querstab 4.2.1 mit angeschweißtem Handgriff 4.2 (Figur 3A) aus Metall oder mechanisch verbundenem Handgriff 4.2 (Figur 3B) aus Kunststoff oder ein Querstab 4.2.1 mit angeschweißtem Bügel als Handgriff 4.2 (Figur 3C), insbesondere u-förmigem Bügel, oder als einteiliger Querbügel als Handgriff 4.2 (Figur 3D) aus Kunststoff oder Metall ausgebildet sein.

Alternativ kann die Betätigungsanordnung 4 als ein von innen in das Schienenprofil und dem innen liegenden Adapter 5 eingreifender Bedienbügel mit einem Bügel 4.1, insbesondere einem u-förmigen Bügel, aus Kunststoff oder Metall oder als ein Hybridbauteil ausgebildet sein.

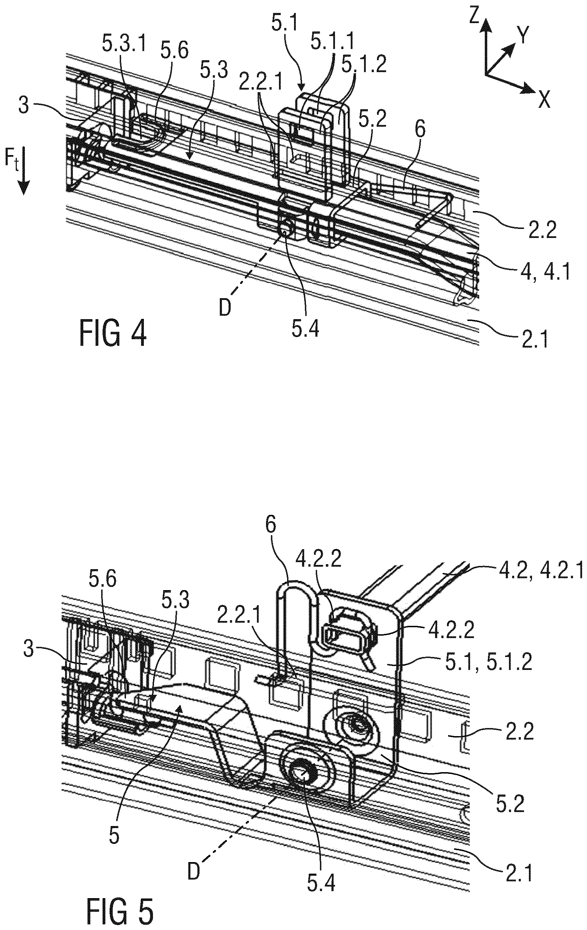

Figuren 4 bis 9 zeigen schematisch verschiedene Ausführungsformen für einen erfindungsgemäßen Adapter 5 für einen Längseinsteller 1 zur Anbindung unterschiedlich ausgebildeter Betätigungsanordnungen 4.

Der Adapter 5 ist derart ausgebildet, dass er in bereits bestehende Längseinsteller 1 montiert und integriert werden kann. Dabei ist der Adapter 5 als ein Kraftübertragungselement ausgebildet, das derart gestaltet ist, dass wenigstens zwei unterschiedlich ausgebildete Betätigungsanordnungen 4 lösbar am Adapter 5 befestigbar sind. Dazu weist der jeweilig dargestellte Adapter 5 mindestens zwei Anbindungsbereiche 5.1, 5.2 auf, die jeweils korrespondierend zu einer der unterschiedlich ausgebildeten Betätigungsanordnungen 4 ausgestaltet sind, wobei der Adapter 5 modular aufgebaut sein kann und ein- oder mehrteilig ausgebildet sein kann. Alternativ kann der Adapter 5 auch nur einen Anbindungsbereich 5.1 oder 5.2 aufweisen.

Figur 4 zeigt einen Adapter 5 mit einem geschlossenen Hohlprofil im Anbindungsbereich 5.2 zur Aufnahme einer innen eingreifenden Betätigungsanordnung 4, wie ein Bügel 4.1, und einem von diesen senkrecht abragenden Anbindungsbereich 5.1, der aus zwei parallel angeordneten Anbindungsarmen 5.1.2 zur Aufnahme einer außen eingreifenden Betätigungsanordnung 4, wie ein Handgriff 4.2, gebildet ist. Alternativ kann auch nur ein Anbindungsarm 5.1.2 vorgesehen sein (Figur 5).

Der Adapter 5 weist dabei im Wesentlichen im Anbindungsbereich 5.2 ein geschlossenes Hohlprofil auf, in welches eine innen eingreifende Betätigungsanordnung 4, wie ein Bügel 4.1, wie oben beschrieben wirksam eingreift. Der Adapter 5 erstreckt sich in Längsausrichtung mit einer Oberflächenseite, insbesondere die in Richtung der oberen Sitzschiene 2.2 weisende Oberflächenseite, im Wesentlichen gerade. Die Anbindungsarme 5.1.2 können dabei einteilig mit dem Hohlprofil ausgebildet sein. Alternativ können diese separat und aus Kunststoff gebildet und in Ausnehmungen des Hohlprofils form- und/oder kraftschlüssig und/oder stoffschlüssig angeordnet sein.

Das der Schienenverriegelung 3 zugewandte Ende 5.3 und das in diese wirksam eingreifende integrierte Entriegelungselement 5.6 ist als ein I-Profil ausgebildet und kann wie dargestellt mit einer Ausnehmung 5.3.1 versehen sein, welche dazu dient eine Schnittstelle zur Schienenverriegelung 3 zu erzeugen. Das Entriegelungselement 5.6 ist dabei als eine Torsionsfeder ausgebildet, so dass bei Drehung des Adapters 5 eine Torsionskraft Fₜ auf die Schienenverriegelung 3 wirkt und diese in die entriegelte Stellung drückt.

Das Federelement 6, beispielsweise eine Bügelfeder oder Schenkelfeder, ist im Anbindungsbereich 5.2 gehalten und am gegenüberliegenden Ende an der Betätigungsanordnung 4 angeordnet und spannt diese in der Ruhe- oder Passivstellung vor, so dass ein Klappern verhindert ist.

Figur 5 zeigt eine alternative Ausführungsform für einen Adapter 5 mit nur einem Anbindungsarm 5.1.2 im Anbindungsbereich 5.1 zur Aufnahme der von außen eingreifenden Betätigungsanordnung 4, die ebenfalls vorgespannt mittels eines Federelements 6, insbesondere eine Bügelfeder oder Schenkelfeder, gehalten ist. Dabei ist die Querstange 4.2.1 durch die Öffnung 5.1.1 vollständig durchgesteckt und weist am aus der Öffnung 5.1.1 herausragenden freien Ende eine Nut 4.2.2 auf, in welcher das Federelement 6 eingreift, so dass die Querstange 4.2.1 gehalten und vorgespannt ist. Das schienenseitige Federende des Federelements 6 ist in der Aussparung 2.2.1 der Sitzschiene 2.2 gehalten.

Im Anbindungsbereich 5.2 für die innen eingreifende Betätigungsanordnung 4 weist der Adapter 5 ein C-Profil auf. Zum wirksamen Eingriff des Adapterendes 5.3 mit dem integrierten Entriegelungselement 5.6 erstreckt sich der Adapter 5 in Längsausdehnung bogenförmig, insbesondere S-förmig, wobei der Boden des C-Profils niedriger liegt als das Adapterende 5.3. In diesem Ausführungsbeispiel liegt der Drehpunkt D der Betätigungsanordnung 4 im Bereich des Adapters 5 und dort insbesondere im Bereich der oberen Sitzschiene 2.2. Hierzu ist der Adapter 5 in diesem Bereich der Sitzschiene 2.2 mittels Lagerzapfen 5.4 drehbar gelagert

Der in Figur 5 gezeigte Adapter 5 dient insbesondere der Anbindung einer von außen eingreifenden Betätigungsanordnung 4.

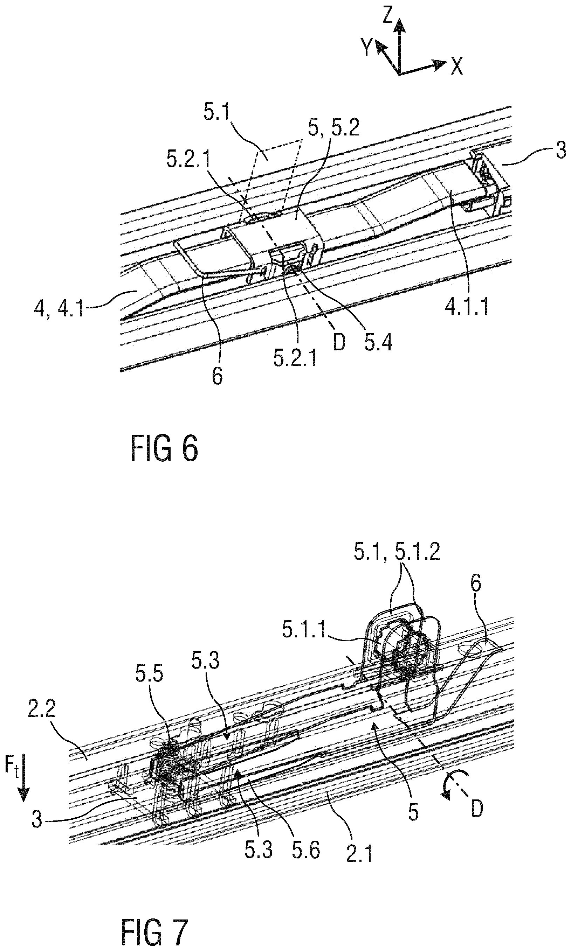

Figur 6 zeigt unter Weglassung des Anbindungsbereiches 5.1 ein Beispiel für die drehbare Lagerung des Adapters 5 in der oberen Sitzschiene 2.2 in Form eines Lagerzapfens 5.4. In diesem Ausführungsbeispiel weist der modulare Adapter 5 nicht das optional in die Schienenverriegelung 3 eingreifende Adapterende 5.3 mit integriertem Entriegelungselement 5.6 auf. Dafür ist der Adapter 5 kompakt ausgeführt, wobei die Bügelenden 4.1.1 der innen eingreifenden Betätigungsanordnung 4 verlängert und entsprechend mehrfach gebogen und durch den Adapter 5 hindurchgeführt sind und wirksam an der Schienenverriegelung 3 eingreifen.

Darüber hinaus weist der Anbindungsbereich 5.2 des Adapters 5 schlitzförmige Öffnungen 5.2.1 auf, in welche separate Anbindungsarme 5.1.2 des Anbindungsbereichs 5.1 anordenbar, insbesondere steck- und/oder rastbar, sind.

Der in Figur 6 gezeigte Adapter 5 dient insbesondere der Anbindung einer innen eingreifenden Betätigungsanordnung 4.

Figuren 7 bis 9 zeigen eine alternative Ausführungsform für einen erfindungsgemäßen Adapter 5 in einer einteiligen Form mit einem integrierten, aus dem Schienenprofil herausragenden äußeren Anbindungsbereich 5.1 mit integriertem, insbesondere angeformtem Federelement 6 zum Vorspannen der außen eingreifenden Betätigungsanordnung 4, so dass diese nach Betätigung wieder in ihre Ausgangsposition (wie gezeigt) zurückgestellt wird, sowie mit integriertem, insbesondere angeformten Entriegelungselement 5.6 am Adapterende 5.3 zur Entriegelung/Öffnen der Schienenverriegelung 3.

Dabei ist das Federelement 6 als ein vom Profil des Adapters 5 abragender Federarm ausgebildet.

Das integrierte Entriegelungselement 5.6 am Adapterende 5.3 ist ebenfalls als ein vom Profil des Adapters 5 abragender Federarm, insbesondere als ein Torsionsfederarm, ausgebildet, der in die Schienenverriegelung 3 wirksam eingreift und hier als Verriegelungsfeder und Rückstellfeder dient. Dabei wird bei Betätigung der Betätigungsanordnung 4 der Adapter 5 geschwenkt und somit das Entriegelungselement 5.6 beim Einwirken auf die Schienenverriegelung 3 verdreht und die Feder gespannt, so dass eine Torsionskraft Fₜ auf die Schienenverriegelung 3 wirkt.

Hierdurch wird für die Schienenverriegelung 3 keine weitere Feder benötigt. Zur Führung der Schienenverriegelung 3 ist diese mittels eines Führungsbolzen 5.5 am Adapter 5 gehalten und geführt. Das als Federarm ausgebildete Adapterende 5.3 ist in der Ansicht mit etwas Überschnitt dargestellt (Federvorspannung).

Der erfindungsgemäße Adapter 5 ist einfach aufgebaut und ermöglicht verschiedenartig ausgebildete Betätigungsanordnungen 4 an einen Längseinsteller 1 anzuordnen und kann an bereits existierende Längseinsteller 1 nachgerüstet werden. Ein neuer erfindungsgemäßer Längseinsteller 1 mit dem erfindungsgemäßen Adapter 5 ist universal einsetzbar und ermöglicht sowohl eine Verwendung mit innerer Betätigung, insbesondere mit einem innen eingreifenden Bedienbügel, als auch mit äußerer Betätigung, insbesondere mit einem außen eingreifenden Bedienhebel. Zudem ist ein solch ausgestalteter Längseinsteller für Schienenanordnungen sowohl mit hohem als auch niedrigem Schienenprofil geeignet. Ferner ist ein solcher Längseinsteller unabhängig von der Art und der Ausgestaltung der Schienenverriegelung und somit zur Adaption einer jeglichen Schienenverriegelung geeignet.

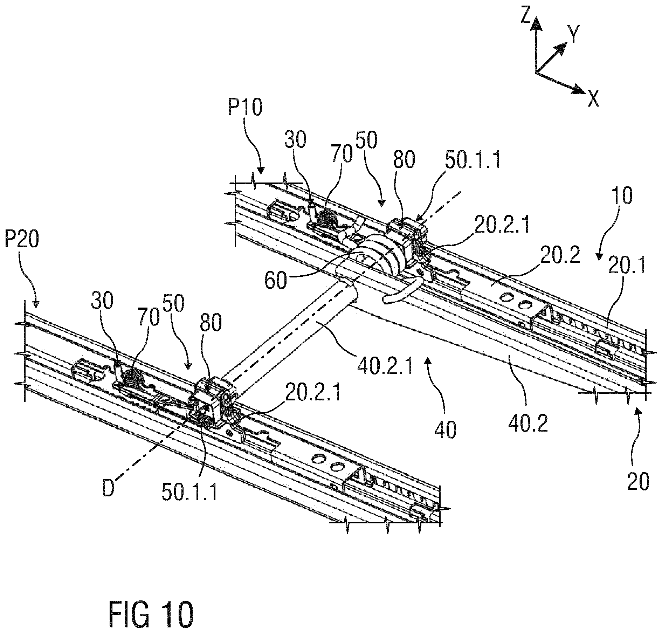

Figuren 10 bis 18 zeigen schematisch eine alternative Ausführungsform für einen Längseinsteller 10 mit einem Adapter 50 und einer Betätigungsanordnung 40. Der Adapter 50 ist aus einem Metall, beispielsweise Stahl, gefertigt. Alternativ kann der Adapter 50 aus einem anderen geeigneten harten Material gefertigt sein. Beispielsweise kann der Adapter 50 aus einem faserverstärkten Kunststoff oder als ein Hybridbauteil, insbesondere ein Metall-Kunststoff-Bauteil, ausgebildet sein.

Auf jeder Fahrzeugsitzseite ist der Längseinsteller 10 mit einem Schienensystem 20, umfassend zwei Schienenpaare P10, P20 mit jeweils zwei Sitzschienen 20.1, 20.2 versehen.

Dabei ist jeweils eine der Schienen 20.1 eines der Schienenpaare P1, P2 fahrzeugfest ausgebildet und mit einer Fahrzeugstruktur, insbesondere dem Fahrzeugboden, verbunden. Die andere Sitzschiene 20.2 ist sitzfest am Fahrzeugsitz befestigt.

Die beiden Sitzschienen 20.1, 20.2 umgreifen einander wechselseitig unter Bildung eines Schienenprofils und sind relativ zueinander in Längsrichtung beweglich.

Die beiden Sitzschienen 20.1, 20.2 jeweils eines Schienenpaares P10 oder P20 sind miteinander mittels einer Schienenverriegelung 30 verriegelbar. Die Schienenverriegelung 30 ist innerhalb des Schienenprofils angeordnet und ist beispielsweise als eine Rastplatte ausgebildet.

Die Schienenverriegelung 30 ist mittels einer Feder 70 in der entriegelten Stellung vorgespannt. Die Feder 70 ist als Rückstellfeder ausgebildet, welche die Schienenverriegelung 30 selbsttätig von der entriegelten Stellung in die verriegelte Stellung zurückstellt.

Diese Schienenverriegelung 30 ist mittels der Betätigungsanordnung 40, die zumindest teilweise außerhalb der Sitzschienen 20.1, 20.2 angeordnet ist, lösbar und betätigbar. Die Betätigungsanordnung 40 umfasst als Handgriff beispielsweise einen Betätigungsarm 40.2.

Zwischen dem Betätigungsarm 40.2 und der Schienenverriegelung 30 ist ein Auslösemechanismus angeordnet, der diese derart miteinander koppelt, dass bei einer Betätigung des Betätigungsarms 40.2 die Schienenverriegelung 30 gelöst und entriegelt wird, so dass eine der Sitzschienen 20.1, 20.2 relativ zur anderen bewegt werden kann.

Der Auslösemechanismus umfasst den hebelförmigen Adapter 50 mit einem aus dem Schienenprofil, insbesondere aus der oberen Sitzschiene 20.2 herausragenden Anbindungsbereich 50.1 für eine Querstange 40.2.1 des Betätigungsarms 40.2. Der Anbindungsbereich 50.1 ist derart ausgestaltet, dass an diesem der von außen eingreifende Betätigungsarm 40.2, insbesondere dessen Querstange 40.2.1, form- und/oder kraftschlüssig fixierbar ist. Beispielsweise ist die Querstange 40.2.1 klipsbar oder rastbar in einer Öffnung 50.1.1 im Anbindungsbereich 50.1 anordenbar.

Die obere Sitzschiene 20.2 weist zur Auslösung der Schienenverriegelung 30 keine Öffnungen in den Seitenwänden auf. Dies erhöht die Schienenfestigkeit.

Der Anbindungsbereich 50.1 und der Adapter 50 sind zur Kopplung des Betätigungsarmes 40.2 mit der Schienenverriegelung 30 vorgesehen, so dass ein herkömmlicher zusätzlicher Entriegelungshebel für die Schienenverriegelung 30 entfallen kann.

Zur Entriegelung beider Schienenpaare P10 und P20 und aus Symmetriegründen sind zwei als Auslösehebel ausgebildete Adapter 50 vorgesehen, die mittels des gemeinsamen Betätigungsarms 40.2 miteinander verbunden sind. Dabei ist der Betätigungsarm 40.2 mit der Querstange 40.2.1 versehen, deren Enden in den Öffnungen 50.1.1 form- und/oder kraftschlüssig gehalten sind. Die Querstange 40.2.1 weist dabei zumindest im Bereich der freien Enden eine von einem runden Querschnitt abweichende Querschnittsform auf. Insbesondere weist die Querstange 40.2.1 endseitig einen profilierten Querschnitt oder Rechteckquerschnitt auf, wodurch eine verbesserte Kraftübertragung und eine verbesserte Befestigung am Anbindungsbereich 50.1 des Adapters 50 ermöglicht ist.

Durch den innen liegenden Auslösemechanismus und die innen liegende Schienenverriegelung 30 sind Fehlauslösungen minimiert. Zudem kann ein gemeinsamer außen liegender Betätigungsarm 40.2 für beide Adapter 50 und beide Schienenverriegelungen 30 genutzt werden.

Der jeweilige Adapter 50 ist einteilig aus Metall oder Kunststoff oder als ein Hybrid-Bauteil aus Metall und Kunststoff gebildet, wobei der Anbindungsbereich 50.1 aus Metall und das Adapterende 50.3 aus Kunststoff gebildet ist.

Der jeweilige Adapter 50 bildet ein Kraftübertragungselement zur Übertragung und Transformation der Drehung des Betätigungsarms 40.2 in eine Vertikalbewegung der Schienenverriegelung 30 zu deren Entriegelung. Der Adapter 50 und die Anbindung des Betätigungsarms 40.2 sind derart gestaltet, dass der Drehpunkt D des Betätigungsarms 40.2 im Bereich der oberen Sitzschiene 20.2, insbesondere im Kantenbereich der oberen Sitzschiene 20.2 gebildet ist. Somit ist der Drehpunkt D des Betätigungsarms 40.2 von diesem nach innen auf den Adapter 50 versetzt. Hierzu ist der Adapter 50 an der oberen Sitzschiene 20.2 schwenkbar gelagert.

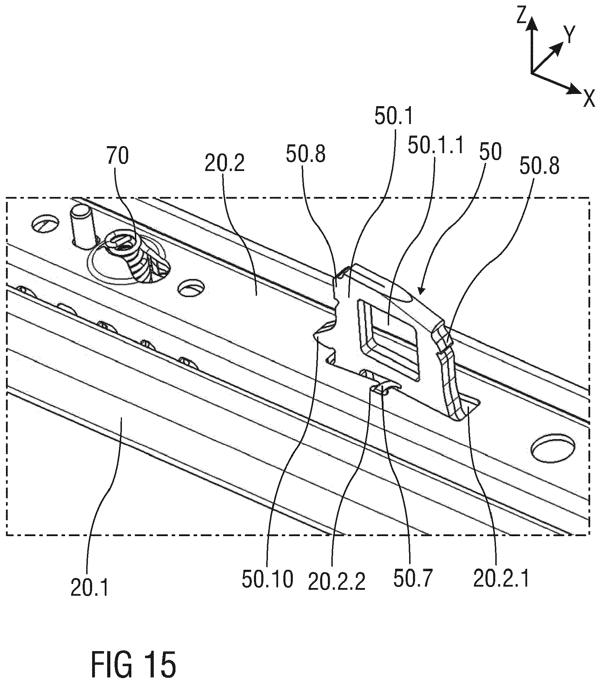

Die obere Sitzschiene 20.2 weist zumindest eine schlitzförmige Aussparung 20.2.1 auf, durch welche der Anbindungsbereich 50.1 des Adapters 50 geführt ist. Die obere Sitzschiene 20.2 umfasst im oberen Bodenbereich weitere Aussparungen oder Öffnungen zur Aufnahme der Feder 70 und des Plattenbolzens, wie in Figur 15 gezeigt.

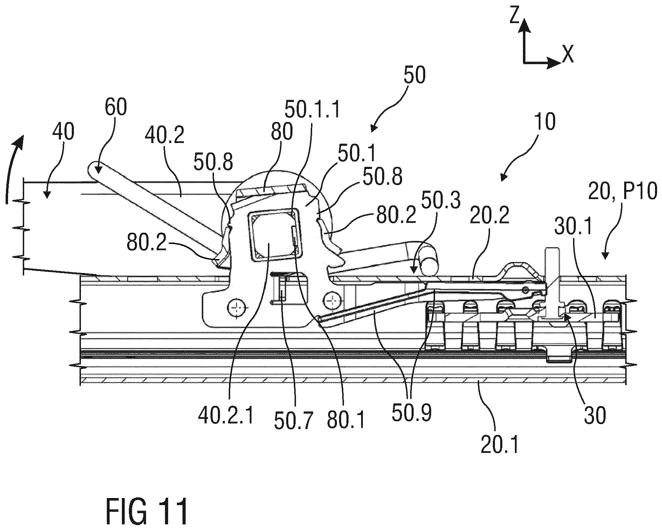

Figur 11 zeigt schematisch im Längsschnitt den Längseinsteller 10 mit der Schienenverriegelung 30 und der Betätigungsanordnung 40, die über den Adapter 50 auf die Schienenverriegelung 30 zu deren Entriegelung einwirkt.

Die Schienenverriegelung 30 umfasst eine als Verriegelungselement 30.1 ausgebildete Rastplatte. Die Rastplatte ist seitlich mit Rastzähnen versehen, die in Rastöffnungen der Sitzschienen 20.1, 20.2 eingreifen und dort zwischen einer entriegelten und verriegelten Stellung vertikal beweglich sind.

Zur Vermeidung von Klappergeräuschen und zur selbsttätigen Halterung des Betätigungsarms 40.2 in der Passiv- oder Ruhestellung ist dieser federvorgespannt am Schienensystem 20, insbesondere an einem der Schienenpaare P10 gehalten. Hierzu ist ein Federelement 60, zum Beispiel eine Bügelfeder, eine Schenkelfeder oder Schraubenfeder, zwischen dem Betätigungsarm 40.2 und der oberen Sitzschiene 20.2 angeordnet. Bei Betätigen des Betätigungsarms 40.2, insbesondere beim Schwenken, dreht sich dieser nach oben, wodurch die Querstange 40.2.1 gedreht und durch diese wiederum der Adapter 50 gedreht wird und das Federelement 60 weiter gespannt wird.

Der jeweilige aus der Aussparung 20.2.1 herausragende Anbindungsbereich 5.1 des Adapters 50 ist mit einer Abdeckung 80 versehen. Die jeweilige Abdeckung 80 ist derart ausgestaltet, dass diese den zugehörigen Anbindungsbereich 50.1 des Adapters 50 form- und/oder kraftschlüssig hält, so dass der Adapter 50 während der Montage der Querstange 40.2.1 an der oberen Sitzschiene 20.2 gehalten ist. Darüber hinaus ist die jeweilige Abdeckung 80 derart ausgestaltet, dass diese einen Endstopper für die Querstange 40.2 bildet, so dass dieser zwischen beiden Schienenpaaren P10 und P20 fixiert ist.

Die Abdeckung 80 weist einen Endstopper 80.1 für das in die Abdeckung 80 hineinragende Ende der Querstange 40.2.1 auf. Der Endstopper 80.1 ist beispielsweise in Form einer Anschlagfläche oder eines abstehenden Hakens ausgebildet.

Darüber hinaus weist die Abdeckung 80 ein Halteelement 80.2 zum Halten des Anbindungsbereiches 50.1 des in die Abdeckung 80, insbesondere in einen Adapterschlitz, eingeführten Adapters 50 auf. Das Halteelement 80.2 ist beispielsweise als ein Klipp oder Rasthaken oder eine Anschlagfläche für hakenförmige Ausformungen 50.8 am Rand des Anbindungsbereiches 50.1 ausgebildet.

Die Schienenverriegelung 30 umfasst ein einzelnes plattenförmiges Verriegelungselement 30.1. Am Adapterende 50.3 umfasst der Adapter 50 ein Dämpfungselement 50.9, das beispielsweise geklipst, gesteckt, gerastet oder mittels eines elastischen Bandes am Adapterende 50.3 befestigt ist. Das Dämpfungselement 50.9 ist aus einem weichen Kunststoffmaterial gebildet und ist ausgestaltet, verschiedene Schienenverriegelungen 30 zu betätigen. Das Dämpfungselement 50.9 dient der Klapperfreiheit.

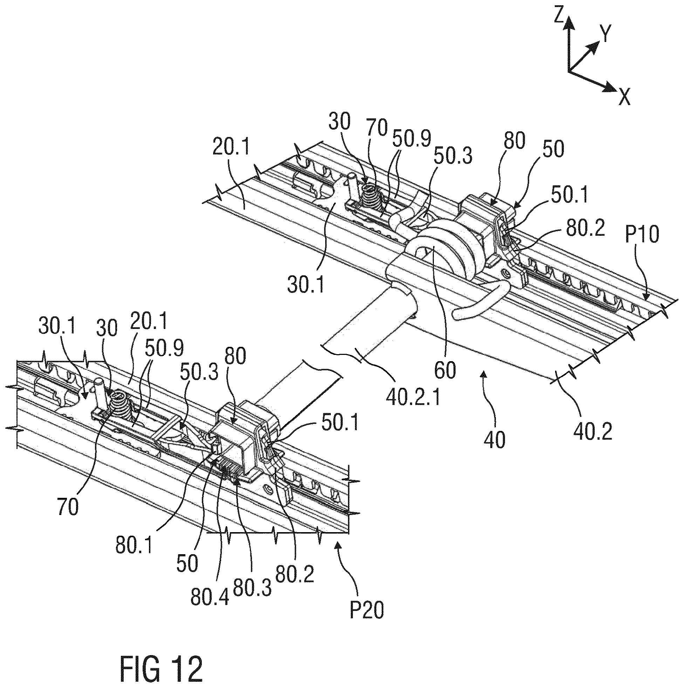

Wie in Figur 12 gezeigt, ist die Abdeckung 80 im der oberen Sitzschiene 20.2 zugewandten Auflagebereich 80.3 flexibel ausgebildet, um in Z-Richtung wirkende Kräfte zu kompensieren. Der Auflagebereich 80.3 ist hierzu entsprechend geformt, beispielsweise in Z-Richtung gewölbt und in Y-Richtung geneigt geformt und mit einer Anzahl von Stützrippen 80.4 versehen. Dabei können die Stützrippen 80.4 aus einem flexiblen Material gebildet sein. Insbesondere ist die Abdeckung 80 aus Kunststoff gebildet.

Figur 12 zeigt schematisch in perspektivischer Darstellung die Betätigungsanordnung 40 und die Schienenpaare P10 oder P20 ohne obere Sitzschiene 20.2, so dass die Schienenverriegelung 30 und die Kopplung des Adapters 50 mit der Schienenverriegelung 30 und der Betätigungsanordnung 40 sichtbar sind.

Der jeweilige Adapter 50 umfasst den Anbindungsbereich 50.1 mit der Öffnung 50.1.1 zur Aufnahme eines der Enden der Querstange 40.2.1 und das innenliegende Adapterende 50.3, das beispielsweise gabelförmig ausgebildet ist und beim Bewegen in die und in der entriegelten Stellung in die Schienenverriegelung 30, insbesondere auf das Verriegelungselement 30.1 von oben wirksam eingreift.

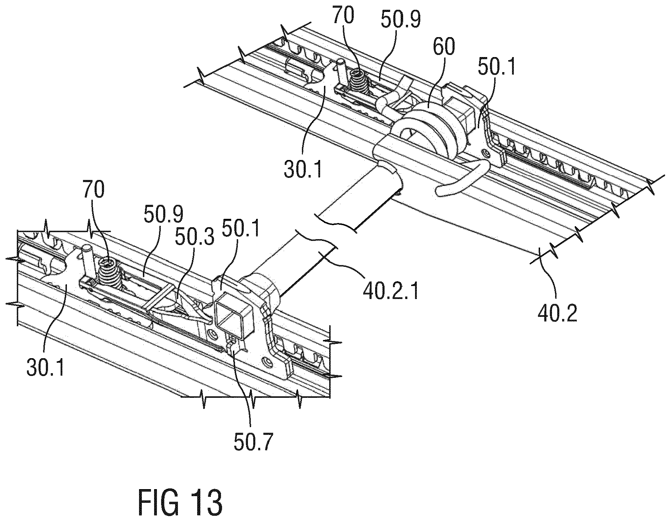

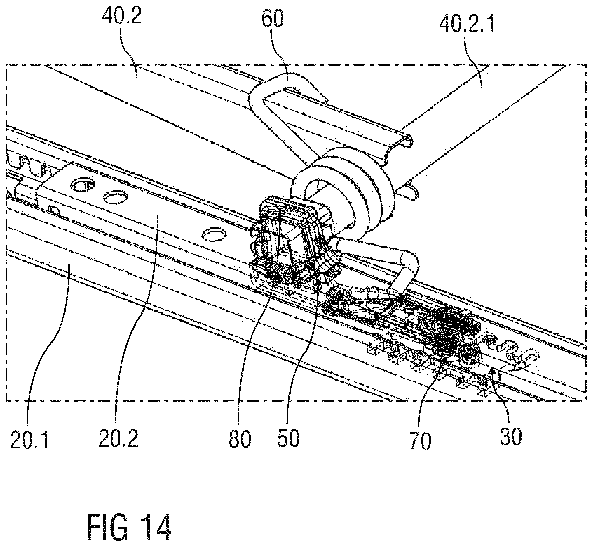

Figuren 13 und 14 zeigen die Betätigungsanordnung 40 jeweils in der Ruhestellung und somit in der unbetätigten Position und damit die Schienenverriegelung 30 in der verriegelten Stellung, in welche beide Sitzschienen 20.1, 20.2 miteinander verriegelt sind.

Figur 15 zeigt in perspektivischer Darstellung eines der Schienenpaare P20 ohne Betätigungsanordnung 40. Zur Sicherung des Adapters 50 gegen eine Verschiebung in Längsrichtung (X-Richtung) weist der Anbindungsbereich 50.1 zwei quer zur X-Richtung abstehende Haltefahnen 50.7 auf, die in korrespondierenden Ausformungen 20.2.2 in der oberen Sitzschiene 20.2 angeordnet sind.

Zusätzlich weist der Adapter 50 einen Anschlag 50.10 als Stopper in Z-Richtung auf, um insbesondere die Kunststoffkomponenten zu schützen. Der Anschlag 50.10 liegt im zusammengebauten Zustand an der oberen Sitzschiene 20.2 auf.

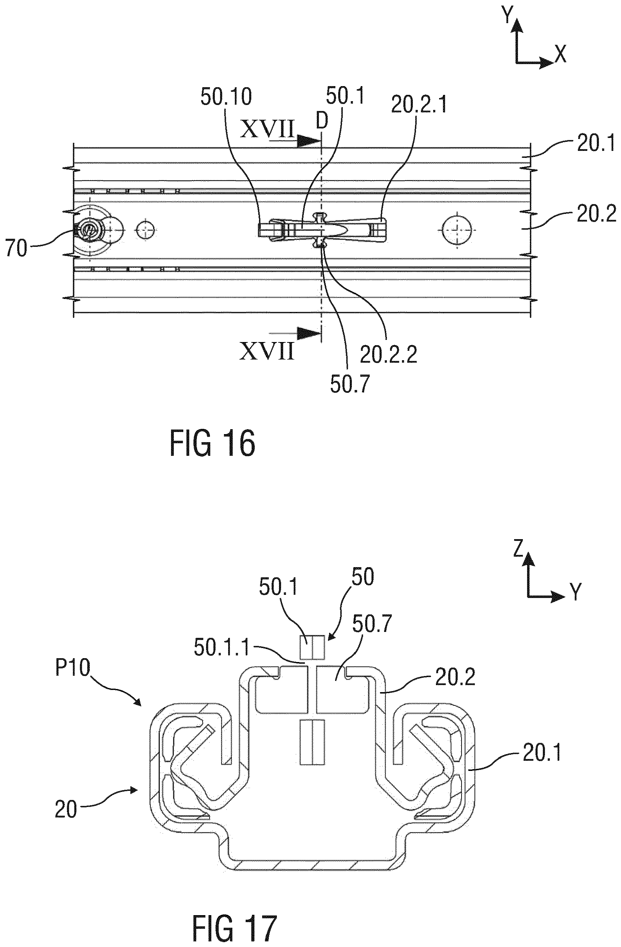

Figur 16 zeigt schematisch in Draufsicht den in der schlitzförmigen Aussparung 20.2.1 angeordneten Anbindungsbereich 50.1 des Adapters 50.

Die schlitzförmige Aussparung 20.2.1 und die Ausformungen 20.2.2 sind derart ausgebildet, dass diese den Adapter 50 in X- und Y-Richtung stützen. Insbesondere ist die Aussparung 20.2.1 zum jeweiligen Ende hin aufgeweitet ausgebildet, das heißt, die Aussparung 20.2.1 weist eine zunehmende Breite zu ihren Enden auf. Ebenso sind die von der Aussparung 20.2.1 abgehenden Ausformungen 20.2.2 nach außen hin aufgeweitet ausgebildet.

Figur 17 zeigt den Schnitt durch die Figur 16 und durch den Drehpunkt D des Adapters 50.

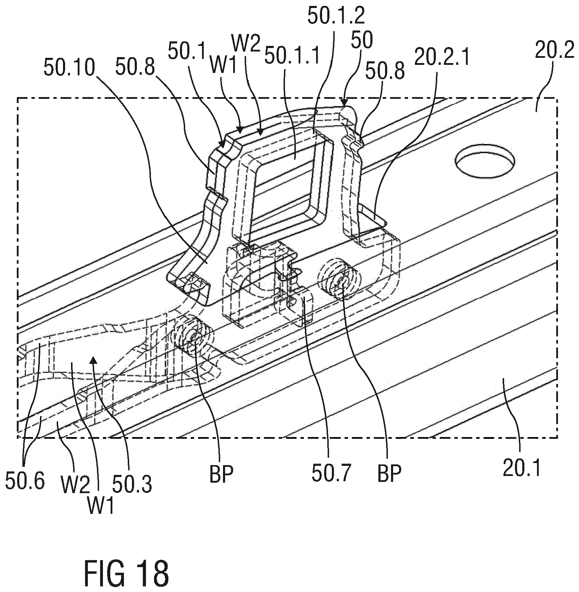

Figur 18 zeigt den im Schienensystem 20 eingebauten Adapter 50 in perspektivischer Darstellung.

Der Adapter 50 ist mehrteilig, insbesondere aus zwei Wandteilen oder Wänden W1, W2 gebildet. Der Adapter 50 ist aus einem Metall, beispielsweise aus Stahl gefertigt. Alternativ kann der Adapter 50 aus einem härteren Material, insbesondere aus einem harten Kunststoff gebildet oder als ein 2-Komponenten-Bauteil, insbesondere als ein Spritzgussteil aus Metall mit umspritzten Kunststoff ausgebildet sein.

Eine weitere Ausführungsform sieht vor, dass der Adapter 50 als ein doppelwandiges Formteil ausgebildet ist. Dabei ist der Adapter 50 aus einem einzelnen Formteil gebildet, das spiegelsymmetrisch ausgebildet ist und entlang einer Symmetrieachse gefaltet ist, wodurch die zwei im Anbindungsbereich 50.1 aneinander liegende Wände W1, W2 gebildet sind. Die beiden aneinander liegenden Wände W1, W2 im Anbindungsbereich 50.1 bilden den Anbindungsarm 50.1.2 für die Betätigungsanordnung 40.

Im Bereich des Adapterendes 50.3 sind die Wände W1, W2 zueinander beabstandet. Hierzu sind die Wände W1, W2 aufgeweitet und bilden zwei abstehende Arme, die das integrierte Entriegelungselement 50.6 bilden, welches dann auf die Schienenverriegelung 30 eingreift.

Alternativ kann der Adapter 50 aus zwei gleichen Formteilen oder Wänden gebildet sein, die miteinander an Befestigungspunkten BP verbunden sind.

Im Anbindungsbereich 50.1 ragen darüber hinaus von den aneinander liegenden Wänden W1, W2 die zwei laschenförmigen Haltefahnen 50.7 voneinander weg nach außen ab.

### Bezugszeichenliste

- 1, 10: Längseinsteller
- 20: Schienensystem
- 2.1, 2.2, 20.1, 20.2: Sitzschienen
- 2.2.1, 20.2.1: Aussparung
- 20.2.2: Ausformung
- 3, 30: Schienenverriegelung
- 3.1, 30.1: Verriegelungselement
- 4.40: Betätigungsanordnung
- 4.1: Bügel
- 4.1.1: Bügelenden
- 4.2: Handgriff
- 40.2: Betätigungsarm
- 4.2.1, 40.2.1: Querstange
- 4.2.2: Nut
- 5, 50: Adapter
- 5.1, 5.2, 50.1: Anbindungsbereich
- 5.1.1, 50.1.1: Öffnung
- 5.1.2, 50.1.2: Anbindungsarm
- 5.2.1: (schlitzförmige) Öffnung
- 5.3, 50.3: Adapterende
- 5.3.1: Ausnehmung
- 5.4: Lagerzapfen
- 5.5: Führungsbolzen
- 5.6, 50.6: Entriegelungselement
- 50.7: Haltefahnen
- 50.8: Ausformung
- 50.9: Dämpfungselement
- 50.10: Anschlag
- 6, 60: Federelement
- 70: Feder
- 80: Abdeckung
- 80.1: Endstopper
- 80.2: Halteelement
- 80.3: Auflagebereich
- 80.4: Stützrippen
- BP: Befestigungspunkt
- P1, P2, P10, P20: Schienenpaar
- W1, W2: Wand
- D: Drehpunkt

## Patentansprüche

1. Längseinsteller (1, 10) eines Fahrzeugsitzes, umfassend
- mindestens eine fahrzeugfeste Sitzschiene (2.1, 20.1) und eine sitzfeste Sitzschiene (2.2, 20.2), die einander unter Bildung eines Schienenprofils wechselseitig umgreifen und relativ zueinander in Längsrichtung beweglich sind und
- mindestens eine Schienenverriegelung (3, 30), mittels der die Sitzschienen (2.1, 2.2, 20.1, 20.2) miteinander verriegelbar sind und
- mindestens eine Betätigungsanordnung (4, 40) zur Betätigung der Schienenverriegelung (3, 30), wobei
zwischen der Betätigungsanordnung (4, 40) und der Schienenverriegelung (3, 30) mindestens ein Adapter (5, 50) angeordnet ist, der als ein Kraftübertragungselement derart ausgestaltet ist, dass zur Anbindung der Betätigungsanordnung (4, 40) zumindest ein Anbindungsbereich (5.1, 50.1) des Adapters (5, 50) aus dem Schienenprofil herausragt und zur Entriegelung der Schienenverriegelung (3, 30) am Adapter (5, 50) mindestens ein integriertes Entriegelungselement (5.6, 50.6) vorgesehen ist, das derart ausgestaltet ist, dass dieses bei Betätigung der Betätigungsanordnung (4, 40) in die Schienenverriegelung (3, 30) zu deren Entriegelung wirksam eingreift, und
**dadurch gekennzeichnet, dass** der Adapter (5) mindestens zwei Anbindungsbereiche (5.1, 5.2) aufweist, die jeweils korrespondierend zu einer der unterschiedlich ausgebildeten Betätigungsanordnungen (4) ausgestaltet sind, und wobei innerhalb des durch die Sitzschienen (2.1, 2.2) gebildeten Schienenprofils ein innerer Anbindungsbereich (5.2) des Adapters (5) angeordnet ist, der sich in Längsausrichtung der Sitzschienen (2.1, 2.2) erstreckt und zur Aufnahme und Halterung einer in das Schienenprofil innen eingeführten Betätigungsanordnung (4) ausgebildet ist.

2. Längseinsteller (1, 10) nach Anspruch 1,
**dadurch gekennzeichnet, dass** der Adapter (5, 50) innerhalb des durch die Sitzschienen (2.1, 2.2, 20.1, 20.2) gebildeten Schienenprofils angeordnet ist und zumindest abschnittsweise aus dem Schienenprofil herausragt.

3. Längseinsteller (1, 10) nach einem der vorhergehenden Ansprüche,
**dadurch gekennzeichnet, dass** aus dem Schienenprofil heraus senkrecht zur Längsausrichtung der Sitzschienen (2.1, 2.2, 20.1, 20.2) ein äußerer Anbindungsbereich (5.1, 50.1) des Adapters (5, 50) herausragt, der zur Aufnahme und Halterung einer außen an das Schienenprofil angeordneten Betätigungsanordnung (4, 40) ausgebildet ist.

4. Längseinsteller (1, 10) nach einem der vorhergehenden Ansprüche,
**dadurch gekennzeichnet, dass** der Adapter (5, 50) derart als Kraftübertragungselement ausgebildet ist, dass der Drehpunkt (D) der Betätigungsanordnung (4, 40) im Bereich der sitzseitigen Sitzschiene (2.2, 20.2) gebildet ist.

5. Längseinsteller (1, 10) nach Anspruch 4,
**dadurch gekennzeichnet, dass** der Drehpunkt (D) im Kantenbereich der sitzseitigen Sitzschiene (2.2, 20.2) liegt.

6. Längseinsteller (1, 10) nach einem der vorhergehenden Ansprüche,
**dadurch gekennzeichnet, dass** der Adapter (5, 50) an der sitzseitigen Sitzschiene (2.2, 20.2) schwenkbar angeordnet ist.

7. Längseinsteller (1, 10) nach einem der vorhergehenden Ansprüche,
**dadurch gekennzeichnet, dass** die jeweilige Betätigungsanordnung (4, 40) federbelastet am Adapter (5, 50) oder an der sitzseitigen Sitzschiene (2.2, 20.2) angeordnet ist.

8. Längseinsteller (1, 10) nach einem der vorhergehenden Ansprüche,
**dadurch gekennzeichnet, dass** der Adapter (5, 50) als ein teilweise offenes oder geschlossenes und/oder ein- oder mehrteiliges Profil ausgebildet ist, von dem mindestens ein Anbindungsarm (5.1.2, 50.1.2) senkrecht absteht.

9. Längseinsteller (10) nach einem der vorhergehenden Ansprüche,
**dadurch gekennzeichnet, dass** der Adapter (50) als ein doppelwandiges Formteil ausgebildet ist.

10. Längseinsteller (10) nach Anspruch 9,
**dadurch gekennzeichnet, dass** der Adapter (50) derart gestaltet ist, dass im Anbindungsbereich (50.1) die Wände (W1, W2) des Formteils aneinander liegen.

11. Längseinsteller (10) nach Anspruch 9 oder 10,
**dadurch gekennzeichnet, dass** der Adapter (50) derart gestaltet ist, dass im Bereich des Entriegelungselements (50.6) die Wände (W1, W2) zueinander beabstandet sind.

12. Längseinsteller (10) nach einem der Ansprüche 9 bis 11,
**dadurch gekennzeichnet, dass** der Adapter (50) im Anbindungsbereich (50.1) derart gestaltet ist, dass von den aneinander liegenden Wänden (W1, W2) zumindest zwei laschenförmige Haltefahnen (50.7) voneinander weg nach außen abragen.

13. Fahrzeugsitz mit einem Längseinsteller (1, 10) nach einem der Ansprüche 1 bis 12.

## Claims

1. Longitudinal adjuster (1, 10) of a vehicle seat, comprising
- at least one seat rail (2.1, 20.1) secured to the vehicle and one seat rail (2.2, 20.2) secured to the seat, which mutually engage to form a rail profile and are movable relative to each other in the longitudinal direction, and
- at least one rail lock (3, 30), by means of which the seat rails (2.1, 2.2, 20.1, 20.2) are lockable to each other, and
- at least one actuation assembly (4, 40) for actuating the rail lock (3, 30), wherein
at least one adapter (5, 50) is arranged between the actuation assembly (4, 40) and the rail lock (3, 30), said adapter (5, 50) being configured as a force transmission element in such a way that at least one connection region (5.1, 50.1) of the adapter (5, 50) protrudes from the rail profile in order to connect the actuation assembly (4, 40), and at least one integrated unlocking element (5.6, 50.6) is provided on the adapter (5, 50) in order to unlock the rail lock (3, 30), said unlocking element (5.6, 50.6) being configured in such a way that, upon actuation of the actuation assembly (4, 40), it actively engages in the rail lock (3, 30) in order to unlock same, and
**characterized in that** the adapter (5) has at least two connection regions (5.1, 5.2), which are each configured corresponding to one of the differently designed actuation assemblies (4), and wherein an inner connection region (5.2) of the adapter (5) is arranged inside the rail profile formed by the seat rails (2.1, 2.2), extends in the longitudinal orientation of the seat rails (2.1, 2.2) and is designed to receive and retain an actuation assembly (4) inserted internally into the rail profile.

2. Longitudinal adjuster (1, 10) according to Claim 1, **characterized in that** the adapter (5, 50) is arranged inside the rail profile formed by the seat rails (2.1, 2.2, 20.1, 20.2) and protrudes at least in parts from the rail profile.

3. Longitudinal adjuster (1, 10) according to one of the preceding claims, **characterized in that** an outer connection region (5.1, 50.1) of the adapter (5, 50) protrudes from the rail profile perpendicularly with respect to the longitudinal orientation of the seat rails (2.1, 2.2, 20.1, 20.2) and is designed to receive and retain an actuation assembly (4, 40) arranged externally on the rail profile.

4. Longitudinal adjuster (1, 10) according to one of the preceding claims, **characterized in that** the adapter (5, 50) is designed as a force transmission element in such a way that the rotation point (D) of the actuation assembly (4, 40) is formed in the area of the seat-side seat rail (2.2, 20.2).

5. Longitudinal adjuster (1, 10) according to Claim 4, **characterized in that** the rotation point (D) lies in the edge area of the seat-side seat rail (2.2, 20.2) .

6. Longitudinal adjuster (1, 10) according to one of the preceding claims, **characterized in that** the adapter (5, 50) is arranged pivotably on the seat-side seat rail (2.2, 20.2).

7. Longitudinal adjuster (1, 10) according to one of the preceding claims, **characterized in that** the respective actuation assembly (4, 40) is arranged with spring loading on the adapter (5, 50) or on the seat-side seat rail (2.2, 20.2).

8. Longitudinal adjuster (1, 10) according to one of the preceding claims, **characterized in that** the adapter (5, 50) is designed as a partially open or closed and/or one-part or multi-part profile, from which at least one connection arm (5.1.2, 50.1.2) issues perpendicularly.

9. Longitudinal adjuster (10) according to one of the preceding claims, **characterized in that** the adapter (50) is designed as a double-walled shaped part.

10. Longitudinal adjuster (10) according to Claim 9, **characterized in that** the adapter (50) is configured in such a way that the walls (W1, W2) of the shaped part bear on each other in the connection region (50.1) .

11. Longitudinal adjuster (10) according to Claim 9 or 10, **characterized in that** the adapter (50) is configured in such a way that the walls (W1, W2) are spaced apart from each other in the area of the unlocking element (50.6).

12. Longitudinal adjuster (10) according to one of Claims 9 to 11, **characterized in that** the adapter (50) in the connection region (50.1) is configured in such a way that, from the walls (W1, W2) bearing on each other, at least two tab-shaped retaining lugs (50.7) protrude outward away from each other.

13. Vehicle seat with a longitudinal adjuster (1, 10) according to one of Claims 1 to 12.

## Revendications

1. Dispositif de réglage longitudinal (1, 10) pour un siège de véhicule, comprenant
- au moins un rail de siège fixé au véhicule (2.1, 20.1) et un rail de siège fixé au siège (2.2, 20.2), qui viennent en prise l'un dans l'autre réciproquement en formant un profilé de rail et qui peuvent être déplacés l'un par rapport à l'autre dans la direction longitudinale et
- au moins un verrouillage de rail (3, 30) au moyen duquel les rails de siège (2.1, 2.2, 20.1, 20.2) peuvent être verrouillés l'un à l'autre et
- au moins un agencement d'actionnement (4, 40) pour l'actionnement du verrouillage de rail (3, 30) ,
au moins un adaptateur (5, 50) étant disposé entre l'agencement d'actionnement (4, 40) et le verrouillage de rail (3, 30), lequel est configuré sous forme d'élément de transfert de force de telle sorte que pour la liaison de l'agencement d'actionnement (4, 40), au moins une région de liaison (5.1, 50.1) de l'adaptateur (5, 50) fasse saillie hors du profil de rail et que pour le déverrouillage du verrouillage de rail (3, 30), au moins un élément de déverrouillage intégré (5.6, 50.6) soit prévu sur l'adaptateur (5, 50), lequel est configuré de telle sorte que lors de l'actionnement de l'agencement d'actionnement (4, 40), il s'engage activement dans le verrouillage de rail (3, 30) pour son déverrouillage, et
**caractérisé en ce que**
l'adaptateur (5) présente au moins deux régions de liaison (5.1, 5.2) qui sont configurées à chaque fois de manière correspondant à l'un des agencements d'actionnement (4) réalisés différemment, et une région de liaison interne (5.2) de l'adaptateur (5) étant disposée à l'intérieur du profil de rail formé par les rails de siège (2.1, 2,2), ladite région de liaison s'étendant dans la direction longitudinale des rails de siège (2.1, 2.2) et étant réalisée pour recevoir et fixer un agencement d'actionnement (4) introduit à l'intérieur dans le profil de rail.

2. Dispositif de réglage longitudinal (1, 10) selon la revendication 1,
**caractérisé en ce que** l'adaptateur (5, 50) est disposé à l'intérieur du profil de rail formé par les rails de siège (2.1, 2.2, 20.1, 20.2) et fait saillie au moins en partie hors du profil de rail.

3. Dispositif de réglage longitudinal (1, 10) selon l'une quelconque des revendications précédentes,
**caractérisé en ce qu'**une région de liaison extérieure (5.1, 50.1) de l'adaptateur (5, 50) fait saillie hors du profil de rail perpendiculairement à l'orientation longitudinale des rails de siège (2.1, 2.2, 20.1, 20.2), laquelle est réalisée pour recevoir et fixer un agencement d'actionnement (4, 40) disposé à l'extérieur au niveau du profil de rail.

4. Dispositif de réglage longitudinal (1, 10) selon l'une quelconque des revendications précédentes,
**caractérisé en ce que** l'adaptateur (5, 50) est réalisé sous forme d'élément de transfert de force de telle sorte que le centre de rotation (D) de l'agencement d'actionnement (4, 40) soit formé dans la région des rails de siège (2.2, 20.2) du côté du siège.

5. Dispositif de réglage longitudinal (1, 10) selon la revendication 4,
**caractérisé en ce que** le centre de rotation (D) est situé dans la région du bord du rail de siège (2.2, 20.2) du côté du siège.

6. Dispositif de réglage longitudinal (1, 10) selon l'une quelconque des revendications précédentes,
**caractérisé en ce que** l'adaptateur (5, 50) est disposé de manière à pouvoir pivoter au niveau du rail de siège (2.2, 20.2) du côté du siège.

7. Dispositif de réglage longitudinal (1, 10) selon l'une quelconque des revendications précédentes,
**caractérisé en ce que** l'agencement d'actionnement respectif (4, 40) est disposé de manière sollicitée par ressort au niveau de l'adaptateur (5, 50) ou au niveau du rail de siège (2.2, 20.2) du côté du siège.

8. Dispositif de réglage longitudinal (1, 10) selon l'une quelconque des revendications précédentes,
**caractérisé en ce que** l'adaptateur (5, 50) est réalisé sous la forme d'un profilé partiellement ouvert ou fermé et/ou en une ou plusieurs parties, depuis lequel fait saillie perpendiculairement au moins un bras de liaison (5.1.2, 50.1.2).

9. Dispositif de réglage longitudinal (10) selon l'une quelconque des revendications précédentes,
**caractérisé en ce que** l'adaptateur (50) est réalisé sous la forme d'une pièce façonnée à double paroi.

10. Dispositif de réglage longitudinal (10) selon la revendication 9,
**caractérisé en ce que** l'adaptateur (50) est configuré de telle sorte que dans la région de liaison (50.1), les parois (W1, W2) de la pièce façonnée soient situées l'une contre l'autre.

11. Dispositif de réglage longitudinal (10) selon la revendication 9 ou 10,
**caractérisé en ce que** l'adaptateur (50) est configuré de telle sorte que les parois (W1, W2) soient espacées l'une de l'autre dans la région de l'élément de déverrouillage (50.6).

12. Dispositif de réglage longitudinal (10) selon l'une quelconque des revendications 9 à 11,
**caractérisé en ce que** l'adaptateur (50) est configuré dans la région de liaison (50.1) de telle sorte qu'au moins deux drapeaux de retenue (50.7) en forme de pattes fassent saillie à l'écart l'un de l'autre vers l'extérieur depuis les parois (W1, W2) situées l'une contre l'autre.

13. Siège de véhicule comprenant un dispositif de réglage longitudinal (1, 10) selon l'une quelconque des revendications 1 à 12.
